Europäisches Patentamt

European Patent Office

Office européen des brevets

(11) Publication number: **0 143 112**
**B1**

# EUROPEAN PATENT SPECIFICATION

(45) Date of publication of patent specification: **04.11.87**

(51) Int. Cl.⁴: **G 01 J 5/00, G 01 W 1/17**

(21) Application number: **83111839.3**

(22) Date of filing: **25.11.83**

(54) Operative temperature sensing system.

(43) Date of publication of application:
**05.06.85 Bulletin 85/23**

(45) Publication of the grant of the patent:
**04.11.87 Bulletin 87/45**

(84) Designated Contracting States:
**AT BE CH DE FR GB IT LI LU NL SE**

(56) References cited:
**US-A-2 685 795**
**US-A-3 531 991**
**US-A-4 058 254**
**US-A-4 164 869**

(73) Proprietor: **Rascati, Richard J.**
**240 Hart Road**
**Guilford, Conn. 06437 (US)**
(73) Proprietor: **Berglund, Larry G.**
**27 Applewood Road**
**Branford, Conn. 06405 (US)**
(73) Proprietor: **Markel, Morris L.**
**246 Doncaster Road**
**Kenmore, N.Y. 14217 (US)**

(72) Inventor: **Rascati, Richard J.**
**240 Hart Road**
**Guilfort, Conn. 06437 (US)**
Inventor: **Berglund, Larry G.**
**27 Applewood Road**
**Branford, Conn. 06405 (US)**

(74) Representative: **Kehl, Günther, Dipl.-Phys. et al**
**Patentanwälte GEYER, HAGEMANN & KEHL**
**Ismaninger Strasse 108 Postfach 86 03 29**
**D-8000 München 86 (DE)**

Courier Press, Leamington Spa, England.

## Description

The present invention generally relates to an operative temperature sensing system. The invention relates more particularly to a system for sensing operative temperature qualitatively defined as the uniform temperature of a radiantly black enclosure in which an occupant would exchange the same amount of heat by radiation plus convection as in an actual non-uniform environment. The object of the invention is to simply and inexpensively sense (for indication and/or control purposes) the operative temperature which closely approximates the thermal environmental sensing capabilities of a human being.

Operative temperature, as used herein, is the algebraic sum, weighted by respective heat transfer coefficients, of the air and mean radiant temperature and may quantitatively be defined as

$$T_o = (H_c T_a + H_r T_r)/(H_c + H_r)$$

wherein:

$T_o$ = operative temperature
$T_a$ = air or ambient temperature
$T_r$ = mean radiant temperature
$H_c$ = convective heat transfer coefficient
$H_r$ = radiative heat transfer coefficient

The prior art is replete with proposed devices which sense factors which purport to correlate human or animal comfort levels with such sensed variables; however, none appear to sense operative temperature (as defined above) in a simple inexpensive and accurate system.

Among such prior art are the following prior U.S. patents:

1. US—A—2,685,795 — relates to a panradiometer consisting of four spheres of differing emmissivities to thereby detect total environmental radiation by heat balancing techniques.

2. US—A—2,739,204 — relates to a space thermostat wherein a single ambient temperature sensor is exposed so as to be sensitive to heat radiating from radiators within the space to be heated.

3. US—A—3,062,941 — relates to a radiation sensitive infrared control for animal heating wherein a globular sensing unit, containing an electrical heating element and a thermistor, is employed to control the infrared source in response to variations in ambient temperature within the globe.

4. US—A—3,092,997 — relates to a heat sensing device wherein a single thermistor is housed within a dome and is shielded from sunlight such that the heat of radiation is transferred at a relatively uniform rate thereto.

5. US—A—3,246,838 — relates to controls for infrared emitters wherein a thermostatic element is provided with a heater for artificially raising the temperature of the surface of the element to approximate the temperature at the surface of the human body.

6. US—A—3,531,991 — relates to a mean radiation temperature meter employing at least three radiation sensing elements having different thermal emmissivity characteristics.

7. US—A—4,058,254 — relates to a temperature monitoring and control system wherein the surface of the sensing means has a radiant absorption coefficient which corresponds to that of a human being whereby the output signal therefrom is used to control the occupied space so that the surface of the sensing means is maintained constant in an attempt to maintain thermal comfort.

8. US—A—4,073,190 — relates to a cold stress meter wherein a measurement is obtained that takes into account the effects on body heat loss, of sun, wind and air temperature. A bead transistor is responsive to both ambient temperature and wind. Other means are provided that are representative of the nonevaporative rate of body heat loss, thermal insulation resistance of still air outside of clothing, fraction of full sunlight intensity reaching a person wearing clothing and the absorptance of the clothing.

9. US—A—4,123,939 — relates to a device for sensing total thermal energy received by an object in a given location wherein thermocouples are placed within a sphere to provide a signal indicative of the thermal energy gradients within the sphere.

10. US—A—4,164,869 — relates to a thermostat for radiant room heating wherein a thin film sensor is used in a bridge network to provide an error signal to actuate a heater.

Generally, the present invention is predicated on a simple determination of "operative temperature" as the function of air temperature (sensed by an ambient temperature sensor) and the temperature sensed by a temperature sensing means (which may comprise a globe thermometer) which is a function of the mean radiant temperature. The electrical signals derived from the air temperature sensor and the temperature sensing means are weighted by heat transfer coefficients such that when algebraically added their sum is equal to unity. In this way we avoid the need for expensive measuring devices to determine mean radiant temperature.

More specifically, and in accordance with the invention, we provide an operative temperature sensing system for sensing operative temperature, comprising an air temperature sensor for generating a first signal having a value that is a function of the air temperature within an enclosed space; temperature sensing means located within said enclosed space for generating a second signal having a value that is a function of mean radiant temperature; characterized by a first signal modifying circuit for changing the value of said first signal by a first fixed and predetermined amount; a second signal modifying circuit for changing the value of said second signal by a second fixed and predetermined amount; said first and second fixed and predetermined amounts representing values that are functions of the size and shape of said second temperature sensing means and being so related that their sum is equal to unity; and circuit means for combining the modified first and second signals to develop an output signal having a value that is a function of operative temperature within the enclosed space.

The air temperature sensor is advantageously located adjacent to the temperature sensing means. The enclosed space may be a room or an apartment the temperature of which is to be controlled to provide a predetermined comfort level. The temperature sensing means may comprise a globe and sensor, hereinafter a globe thermometer. The outer surface of the globe may be spherical but other shapes can be used, although a spherical globe is preferred. In the case of a globe, since globe temperature $(T_g)$ is a function of mean radiant temperature $(T_r)$ and ambient temperature $(T_a)$, the operative temperature $(T_o)$ becomes a function of air and globe temperature. Accordingly, the signals generated by the air temperature sensor and the globe thermometer sensor are representative of the operative temperature.

Objects, features and advantages of the invention will become apparent from the following disclosure taken in conjunction with the accompanying drawings.

Fig. 1 is a diagrammatic representation of the ambient sensor and the radiant temperature related sensing means of the present invention; and

Fig. 2 is a circuit diagram of the electronic components for developing an output signal indicative of operative temperature from the sensor illustrated in Fig. 1.

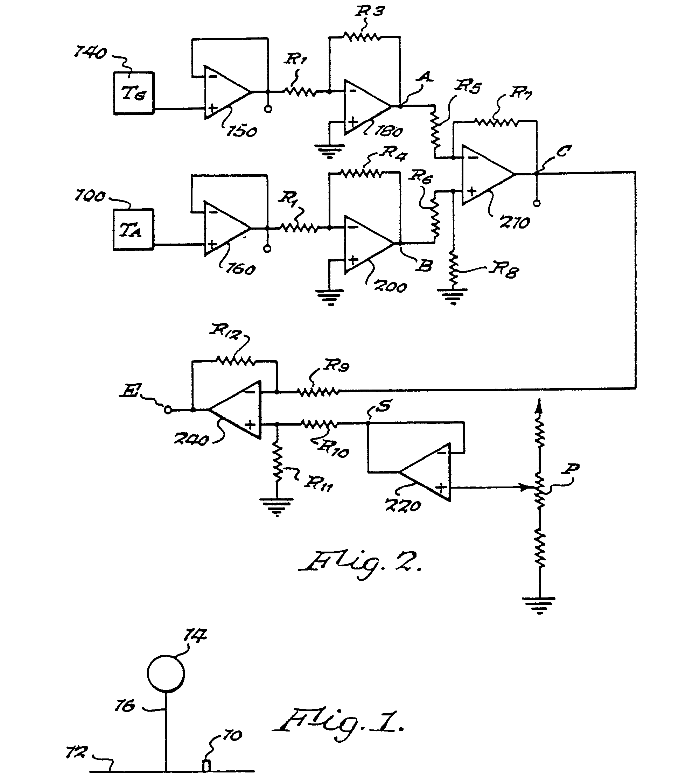

As indicated above, the operative temperature $(T_o)$ is given by $(H_cT_a + H_rT_r)/(H_c + H_r)$. The sensing system of the present invention includes an air or ambient temperature sensor 10 (depicted schematically in Fig. 1) which senses $T_a$ in an enclosure, such as a room. Sensor 10 may be suitably mounted on a base or support 12 and is located adjacent the radiant temperature related sensing means which may comprise globe 14 mounted on a suitable pedestal or the like 16. The globe part 14 of the sensing means, as shown is spherical (although other suitable shapes may be employed) and has housed therein a sensor (not illustrated in Fig. 1) but forming part of the sensing means, which sensor develops a signal indicative of the temperature $(T_g)$ within the globe as is well known. This temperature $(T_g)$ is a function of mean radiant temperature $(T_r)$ and the ambient temperature of the enclosure or room. Since the globe 14 and the sensor housed therewithin, namely the globe thermometer, are well known in the art, the specific construction thereof will not be further discussed, and it is to be understood that the numeral 14 depicts the globe thermometer as a unit, including the sensor within the globe.

As will be evident from the disclosure to follow temperatures $T_a$ and $T_g$ are suitably modified or weighted by predetermined constants and algebraically combined such that an output signal is developed that is a function of operative temperature $(T_o)$.

Referring to Fig. 2, the sensor 10 of Fig. 1 is schematically represented at 100 and the globe thermometer 14 is represented at 140. The signals from 140 and 100 are suitably amplified by amplifiers 150 and 160, respectively, which may be high impedance buffer amplifiers which allow the high output impedance of the temperature sensors to be inputed to the remaining control circuitry. The outputs from amplifiers 150 and 160 (representative of $T_g$ and $T_a$, respectively) are fed through series resistors $R_1$ to second amplifiers 180 and 200, respectively. Shunt resistors $R_3$ and $R_4$ are provided across amplifiers 180 and 200, respectively, such that the output signals of amplifier 180 at point A is equal to $(R_3/R_1)T_g$ and the output signal of amplifier 200 at point B is equal to $(R_4/R_1)T_a$. It sould be apparent that $R_3/R_1$ and amplifier 180 and $R_4/R_1$ and amplifier 200 function as modifying circuit means for the signal from globe thermometer 140 and air sensor 100, respectively. These signals are combined through amplifier 210, resulting in an output signal at point C which is equal to $(R_3/R_1)T_g - (R_4/R_1)T_a$; the values of resistors $R_5$, $R_6$, $R_7$, and $R_8$ all being equal to each other. It should be thus readily apparent that proper choice of the values or range of values of $R_1$, $R_3$ and $R_4$ will result in a signal at point C that is a function of operative temperature $(T_o)$.

This signal at point C then may be compared to a set point reference signal at point S, which is suitably developed by a variable potentiometer P and an amplifier 220, to determine the difference in value between $T_o$ and a setpoint temperature $(T_s)$ for control and/or indication purposes. To this end the signals at point C and point S are fed into a comparative amplifier 240 to generate an error signal at point E indicative of the difference therebetween. Thus, the signal at point E is equal to the algebraic sum of $T_s$ and $T_o$. The resistors $R_9$, $R_{10}$, $R_{11}$ and $R_{12}$ may all be of equal value.

An example of the manner in which the predetermined values $R_3/R_1$ and $R_4/R_1$ may be determined as weighting factors for $T_a$ and $T_g$ will now be discussed. However, it should be understood that the actual values given are exemplary of one set of parameters and should not be interpreted as universally applicable.

According to American Society of Heating Refrigeration and Air Conditioning Engineers (ASHRAE) standard 55—81 at air speeds less than 40 feet/minute (20,32 cm/sec):

$$T_o = .42\, T_a + .48\, T_r$$

However, since (at steady state) the heat absorbed by the globe 14 by radiation is equal to the heat transferred by the globe by convection, then:

$$T_r = T_g + H_c/H_r \, (T_g - T_a)$$

Under test conditions, it may be determined that

$$H_c/H_r = 1.2$$

When using a hollow sphere having a diameter of substantially 3,81 cm for globe 14, then, from the above:

$$T_r = T_g + 1.2 \, (T_g - T_a) \text{ and};$$

$$T_o = .42 \, T_a + .58 \, (2.2 \, T_g - 1.2 \, T_a) \text{ or:}$$

$$T_o = 1.276 \, Tg - .276 \, T_a$$

Thus, it can be seen that the value of $R_3/R_1$ should substantially equal 1.28 and the value of $R_4/R_1$ should substantially equal .28. In this example, then, resistor values for $R_1$, $R_3$ and $R_4$ of 10K, 12.8K and 2.8K, respectively, would provide the ASHRAE standard for $T_o$ wherein a 3,81 cm diameter hollow sphere is used for globe 14. The sphere may be fabricated of any suitable material, as is well known in the art. It is also apparent that the relationship between the fixed and predetermined values of $R_3/R_1$ and $R_4/R_1$ is such that when the two are added together or summed, the resulting value $(1.28 + (-.28) = 1)$ will always be one or unity, as will be the sum of the weighting factors (.42 and .58) for $T_a$ and $T_r$, respectively.

It should be realized that other sizes, shapes and types of globes would result in other values for $R_1$, $R_3$ and $R_4$. Also, larger air currents would similarly result in other values for these resistors. In fact, globe 14 could be of any regular or irregular geometric shape.

Many different types of sensors may be used for sensing $T_a$ and $T_g$; however, it has been found that sensors such as National Semiconductor LM 3911 produce accurate and linear results. The output of each sensor may be calibrated to be 10 mV/°C.

The present invention has disclosed for illustrative purposes a simple yet effective technique and structure for quickly and inexpensively determining operative temperature. Various modifications will occur to those skilled in the art and it is therefore intended that the present invention be limited only by the scope of the appended claims.

## Claims

1. An operative temperature sensing system for sensing operative temperature, comprising an air temperature sensor (10) for generating a first signal having a value that is a function of the air temperature within an enclosed space; temperature sensing means (14) located within said enclosed space for generating a second signal having a value that is a function of mean radiant temperature; characterized by a first signal modifying circuit ($R_3$, $R_1$, 180) for changing the value of said first signal by a first fixed and predetermined amount; a second signal modifying circuit ($R_4$, $R_1$, 200) for changing the value of said second signal by a second fixed and predetermined amount; said first and second fixed and predetermined amounts representing values that are functions of the size and shape of said second temperature sensing means and being so related that their sum is equal to unity; and circuit means (210) for combining the modified first and second signals to develop an output signal (C) having a value that is a function of operative temperature within the enclosed space.

2. The system according to claim 1, characterized in that each of said signal modifying circuits includes an amplifier (180, 200) having shunt resistors ($R_3 R_4$) which determine said first and second fixed and predetermined values.

3. The system according to claim 2, characterized in that said first and second fixed and predetermined values are determined as ratios of said shunt resistors to equal value resistors ($R_1$) which supply as inputs to said first and second modifying circuits the output of said air temperature sensor and said temperature sensing means respectively.

4. The system according to claim 2 or 3, characterized in that said shunt resistors have resistance values such that said first signal is modified by a factor substantially equal to 0.28 and said second signal is modified by a factor substantially equal to 1.28.

5. The system according to any one of the preceding claims, characterized by a set point reference signal generator (P, 220) for developing an output signal that is a function of a desired set point temperature; and a comparator (240) supplied with said set point output and said operative temperature related output signal for developing an error signal that is a function of the difference therebetween.

6. The system of any of the preceding claims, characterized in that said temperature sensing means comprises a globe thermometer.

7. The system of claim 6, characterized in that said globe thermometer includes a spherical chamber having a diameter of substantially 1.5 inches (3.8 cm).

**Patentansprüche**

1. Betriebstemperaturfühlsystem zum Erfassen einer Betriebstemperatur, mit einem Lufttemperaturfühler (10) zur Erzeugung eines ersten Signals, das einen Wert aufweist, der eine Funktion der Lufttemperatur innerhalb eines geschlossenen Raumes ist, mit in dem geschlossenen Raum angeordneten Temperaturfühlmitteln (14) zur Erzeugung eines zweiten Signals, das einen Wert aufweist, der eine Funktion der mittleren Strahlungstemperatur ist, gekennzeichnet durch eine erste Signalmodifizierschaltung ($R_3$, $R_1$, 180) zur Änderung des Wertes des ersten Signals um einen festgelegten und vorgegebenen Betrag, eine zweite Signalmodifizierschaltung ($R_4$, $R_1$, 200) zur Änderung des Wertes des zweiten Signals um einen festgelegten und vorgegebenen Betrag, wobei der erste und der zweite der festgelegten und vorgegebenen Beträge Werte darstellen die Funktionen der Größe und Form der zweiten Temperaturfühlmittel sind und die in einer solchen Beziehung stehen, daß ihre Summe gleich Eins ist, und Schaltungsmittel (210) zur Kombination der modifizierten ersten und zweiten Signale, um ein Ausgangssignal (C) zu entwikkeln, das einen Wert aufweist, der eine Funktion der Betriebstemperatur innerhalb des geschlossenen Raumes ist.

2. System nach Anspruch 1, dadurch gekennzeichnet, daß jede der Signalmodifizierschaltungen einen Verstärker (180, 200) einschließt, der Shunt-Widerstände (R_3 R_4) aufweist, die den ersten und den zweiten der festgelegten und vorgegebenen Werte bestimmen.

3. System nach Anspruch 2, dadurch gekennzeichnet, daß der erste und der zweite der festgelegten und vorgegebenen Werte als Verhältnisse der Shunt-Widerstände zu Widerständen (R_1) gleichen Wertes bestimmt sind, die als Eingänge das Ausgangssignal des Lufttemperaturfühlers bzw. der Temperaturfühlmittel für die erste und die zweite der Modifizierschaltungen liefern.

4. System nach Anspruch 2 oder 3, dadurch gekennzeichnet, daß die Shunt-Widerstände solche Widerstandswerte aufweisen, daß das erste Signal um einen Faktor, der im wesentlichen gleich 0,28 ist und das zweite Signal um einen Faktor, der im wesentlichen gleich 1,28 ist, modifiziert werden.

5. System nach einem der vorhergehenden Ansprüche, gekennzeichnet durch einen Sollwertreferenzsignalgenerator (P, 220) zur Entwicklung eines Ausgangssignals, das eine Funktion einer gewünschten Sollwerttemperatur ist und durch einen Vergleicher (240), dem das Sollwertsignal und das der Betriebstemperatur zugeordnete Ausgangssignal zugeführt werden, zur Entwicklung eines Fehlersignals, das eine Funktion der Differenz zwischen den beiden ist.

6. System nach einem der vorhergehenden Ansprüche, dadurch gekennzeichnet, daß die Temperaturfühlmittel ein Kugelthermometer aufweisen.

7. System nach Anspruch 6, dadurch gekennzeichnet, daß das Kugelthermometer eine sphärische Kammer mit einem Durchmesser von etwa 1,5 inch (3,8 cm) aufweist.

**Revendications**

1. Système de mesure de la température de travail comprenant un mesureur de la température de l'air (10) générant un premier signal dont la valeur est fonction de la température de l'air ambiante dans un espace fermé; des moyens de mesure de la température (14) disposés à l'intérieur de cet espace fermé pour générer un second signal fonction de la température rayonnante moyenne; caractérisé par: une premier circuit de modification de signal (R_3, R_1, 180) pour modifier la valeur du premier signal selon un montant fixe et prédéterminé; un second circuit de modification de signal (R_41, 200) pour modifier la valeur du second signal selon un montant fixe et prédéterminé; ces premiers et deuxièmes montants fixes et prédéterminés représentant des valeurs qui sont fonction des dimensions et de la forme des deuxièmes moyens de mesure de la température, et dont les rapports sont tels que leur somme est égale à l'unité; et des moyens de circuit (210) pour combiner les premiers et seconds signaux modifiés en vue de produire un signal de sortie (C) ayant une valeur qui soit fonction de la température de travail à l'intérieur de l'espace fermé.

2. Système de mesure selon la revendication 1, caractérisé en ce que chacun des circuits de modification du signal comprend un amplificateur (180, 200) disposant de résistances de dérivation (R_3, R_4) qui déterminent les premières et les deuxièmes valeurs fixes et prédéterminées.

3. Système de mesure selon la revendication 2, caractérisé en ce que les premières et les deuxièmes valeurs fixes et prédéterminées sont définies comme rapport des résistances de dérivation à des résistances de valeur égale (R_1), lesquels fournissent en tant qu'entrée aux premiers et deuxièmes circuits de modification la sortie du mesureur de la température de l'air et des moyens de mesure de la température, respectivement.

4. Système de mesure selon la revendication 2 ou 3, caractérisé en ce que les résistances de dérivation présentent des valeurs de résistance telles que le premier signal est modifié selon un facteur substantiellement égal à 0,28 et que le deuxième signal est modifié selon un facteur substantiellement égal à 1,28.

5. Système de mesure selon l'une quelquonque des revendications précédentes, caractérisé par un générateur de signal de référence de point donné (P, 220) pour développer un signal de sortie qui est fonction d'un niveau de température souhaité; et un comparateur (240) qui reçoit la sortie du signal de point donné et du signal de la température de travail en vue de produire un signal d'erreur qui est fonction de la différence entre ces deux signaux.

6. Système de mesure selon l'une quelquonque des revendications précédentes, caractérisé en ce que les moyens de mesure de la température comprennent un thermomètre à boule.

7. Système de mesure selon la revendication 6, caractérisé en ce que le thermomètre à boule présente une chambre sphérique ayant un diamètre approximatif de 1,5 inch (3,8 cm).

*Fig. 2.*

*Fig. 1.*